# DEMANDE DE BREVET EUROPEEN

(11) **EP 2 471 700 A1**
(43) Date de publication de la demande: **04.07.2012**
(21) Numéro de dépôt: 11193938.5
(22) Date de dépôt: 16.12.2011
(51) Int. Cl.: B62H 1/00, B62K 15/00, B62J 13/00, B62J 13/02

(54) **Bicyclette pliable avec système de stabilisation**

(30) Priorité: 31.12.2010 FR 1061396
(71) Demandeur: Decathlon, 59650 Villeneuve d'Ascq (FR)
(72) Inventeur: Poullet, Benjamin, 59830 Cysoing (FR); Bassetti, Pierre-Louis, 59710 Merignies (FR); Marais, Tony, 59000 Lille (FR)
(74) Mandataire: Balesta, Pierre

(57) **Abrégé**

L'invention concerne une bicyclette pliable (1) comprenant un cadre (2) comportant une partie arrière (3) sur laquelle est agencée une roue arrière (10), une partie avant (4) et, un système de pliage (19) configuré pour rabattre ladite partie avant contre ladite partie arrière. La partie arrière comprend de chaque côté latéral de la bicyclette (1), une structure tubulaire (8, 9) comprenant au moins un tube (21, 22, 25) s'étendant longitudinalement et comportant une portion arrière et une portion avant, des moyens d'assemblage (23) étant agencés entre lesdites portions arrière et la roue arrière, lesdites portions avant ayant une forme recourbée configurée pour venir au contact du sol lorsque la partie avant (4) est rabattue contre la partie arrière (3), en sorte que lesdites deux portions avant et au moins la roue arrière (10) stabilisent la partie arrière (3) de la bicyclette en position pliée.

## Description

La présente invention concerne une bicyclette pliable ayant pour objet principal de faciliter la stabilisation de ladite bicyclette dans sa position pliée.

De manière connue, les bicyclettes pliables comprennent un cadre qui comporte notamment une partie arrière et une partie avant. La partie arrière comprend généralement une roue arrière, un tube de selle, une selle montée coulissante sur le tube de selle par le biais d'une tige de selle, un pédalier et un système de transmission, notamment du type chaine, agencé entre ladite roue arrière et ledit pédalier. De même, la partie avant comprend généralement un tube de direction recevant à pivotement une fourche à l'extrémité supérieure de laquelle est agencé un guidon et à l'extrémité inférieure de laquelle est agencée la roue avant. En outre, la bicyclette comprend un système de pliage qui est agencé entre la partie arrière et la partie avant en sorte de permettre le rabattement de ladite partie avant contre ladite partie arrière.

Un inconvénient principal des bicyclettes pliables porte sur la stabilisation de ladite bicyclette dans sa position pliée. A cet effet, certaines bicyclettes pliables, comme celles décrites dans le brevet européen publié sous le numéro EP 1.970.296 B1 et dans le brevet américain publié sous le n° US 6.336.649 B1, comprennent à l'extrémité avant de leur partie arrière, une béquille. La combinaison de cette béquille, de la roue arrière et de la roue avant, lorsque la partie avant est rabattue contre la partie arrière, permet de constituer trois appuis, à savoir deux appuis arrière obtenus par les roues avant et arrière rabattues l'une contre l'autre et au contact du sol et, un appui avant obtenu par la béquille. Cela permet de stabiliser la bicyclette dans la position pliée et de la maintenir plus ou moins convenablement en position verticale.

L'objet de la présente invention est de mettre en oeuvre un système de stabilisation de la bicyclette pliable lorsque celle-ci est dans sa position pliée, dont la conception, en comparaison aux bicyclettes pliables décrites dans les documents EP 1.970.296 B1 et US 6.336.649 B1, facilite la fabrication de ladite bicyclette et la mise en place dudit système de stabilisation.

A cet effet, l'invention concerne une bicyclette pliable comprenant un cadre qui comporte :
- une partie arrière sur laquelle sont agencés notamment une roue arrière, un tube de selle, une selle et un pédalier ;
- une partie avant sur laquelle sont agencés notamment un tube de direction, un guidon et une roue avant et ;
- un système de pliage agencé entre la partie arrière et la partie avant et configuré pour rabattre ladite partie avant contre ladite partie arrière.

De manière remarquable, selon la bicyclette pliable objet de la présente invention, la partie arrière comprend de chaque côté latéral de ladite bicyclette, une structure tubulaire comprenant au moins un tube s'étendant longitudinalement et comportant une portion arrière et une portion avant, des moyens d'assemblage étant agencés entre les portions arrière des tubes disposés de chaque coté latéral de la bicyclette et la roue arrière. En outre, les portions avant desdits tubes disposés de chaque coté latéral de la bicyclette ont une forme recourbée, configurée pour venir au contact du sol ou de la surface sur laquelle est disposée ladite bicyclette en position pliée, lorsque la partie avant est rabattue contre la partie arrière, en sorte que lesdites deux portions avant des structures tubulaires et au moins la roue arrière qui reposent sur le sol, stabilisent plus ou moins verticalement la bicyclette en position pliée.

On comprend que selon la conception de la bicyclette objet de la présente invention, il n'est plus nécessaire de prévoir une béquille tel que cela est le cas selon les documents EP 1.970.296 B1 et US 6.336.649 B1. En outre, cette suppression de béquille ne nécessite plus de réaliser un escamotage de celle-ci comme cela est le cas pour les bicyclettes décrites dans les documents EP 1.970.296 B1 et US 6.336.649 B1.

En effet, selon l'invention, le rabattement de la partie avant contre la partie arrière permet de constituer systématiquement la stabilisation, de par la forme des portions avant des tubes qui permettent de constituer deux appuis avant sur le sol lorsque la partie arrière de la bicyclette en position pliée, est inclinée vers le bas par un pivotement de cette partie arrière par rapport à l'axe de la roue arrière, cette roue arrière assurant elle-même un appui arrière sur le sol.

En outre, les caractéristiques de la bicyclette pliable objet de l'invention telle que précitées, présentent pour avantages d'assurer une meilleure stabilisation de la bicyclette dans sa position pliée au niveau de l'extrémité avant de la partie arrière de la bicyclette, le tube de selle et la selle étant positionnés dans une zone située au-dessus de cette extrémité avant. Cela présente pour avantage, de permettre à l'utilisateur de s'asseoir sur la selle de la bicyclette en position pliée et stable, en particulier lorsque l'utilisateur se déplace avec la bicyclette en position pliée dans les transports en commun tels qu'un bus ou un train et que tous les sièges de passager sont occupés, voire que l'utilisateur de la bicyclette souhaite rester à proximité de celle-ci.

Selon la bicyclette pliable objet de la présente invention, la portion avant du tube de la structure tubulaire située sur le côté latéral de la bicyclette où est agencé le pédalier, présente une forme recourbée configurée pour entourer ledit pédalier. Cela présente pour avantage de protéger le pédalier lorsque la bicyclette est stabilisée en position pliée. Cela présente également pour avantage de protéger les jambes de l'utilisateur de la bicyclette lorsque celui-ci pédale. Cela présente également comme avantage, en position pliée, de protéger l'utilisateur et l'environnement susceptible d'être en contact avec le vélo.

Selon la bicyclette pliable objet de la présente invention, celle-ci comprend un système de transmission qui engrène avec le pédalier et avec la roue arrière. En outre, la structure tubulaire disposée du côté du pédalier comprend un tube supérieur et un tube inférieur reliés entre eux au niveau de leur extrémité avant par une portion tubulaire cylindrique qui entoure le pédalier, les tubes supérieur et inférieur et la portion tubulaire cylindrique entourant le système de transmission et étant de largeur supérieure à la largeur dudit système de transmission, en sorte de recouvrir ledit système de transmission et de faciliter l'assemblage du système de transmission. Cela présente pour avantage de protéger ledit système de transmission tant dans la position normale d'utilisation de la bicyclette que dans sa position pliée. Par ailleurs l'assemblage du système de transmission est facilité puisque sur les constructions traditionnelles, il y a croisement entre le système de transmission et le cadre, ce qui nécessite d'avoir un cadre ouvert lors de l'assemblage ou une chaîne en deux parties que l'on assemble après l'avoir croisé vis-à-vis du cadre.

Selon cette conception de la bicyclette pliable objet de l'invention, le système de transmission est de préférence déporté vers l'intérieur de la bicyclette par rapport aux tubes supérieur et inférieur et à la portion tubulaire cylindrique, en sorte d'éviter tout contact avec ledit système de transmission. Cela évite par exemple à l'utilisateur de se prendre les jambes de pantalon dans ledit système de transmission lorsque celui-ci pédale. Cela présente également comme avantage, en position pliée, de protéger l'utilisateur et l'environnement susceptible d'être en contact avec le vélo.

Selon la bicyclette pliable objet de l'invention, la portion avant du tube de la structure tubulaire, située sur le côté latéral de la bicyclette opposé à celui où est agencé le pédalier, présente une forme recourbée configurée pour permettre la manipulation avec une main de ladite bicyclette en position pliée. Ainsi, outre la fonction de stabilisation de la bicyclette en position pliée, la portion avant du tube assure également une fonction de manipulation, l'utilisateur pouvant par exemple lever l'extrémité avant de la partie arrière de la bicyclette en conservant la roue arrière au contact du sol, ce qui permet de déplacer facilement ladite bicyclette en position pliée, voire soulever en toute facilité le vélo et ce sans que la roue arrière soit en contact avec le sol.

Selon la bicyclette pliable objet de l'invention, les tubes des structures tubulaires disposés de chaque côté latéral de la bicyclette et par conséquent de chaque coté du tube de selle, sont fixés entre eux, dans leurs portions avant, par l'intermédiaire d'une première plaque transversale, disposée en partie inférieure. Selon cette conception de la bicyclette, le tube de selle comprend une extrémité inférieure qui est fixée sur la première plaque transversale.

Selon la bicyclette pliable objet de l'invention, le pédalier est monté sur le tube de selle dans une portion située entre le tube supérieur et le tube inférieur de la structure tubulaire, du coté latéral où est agencé ledit pédalier. Ce montage du pédalier sur le tube de selle est réalisé indépendamment desdits tubes supérieur et inférieur et de la portion tubulaire cylindrique.

Selon la bicyclette pliable objet de l'invention, les portions avant des tubes disposés de chaque coté de la bicyclette sont fixées entre elles par l'intermédiaire d'une seconde plaque transversale, disposée en partie supérieure, le système de pliage étant agencé sur ladite seconde plaque transversale. En outre, selon cette conception, la seconde plaque transversale est fixée avec le tube de selle pour renforcer la rigidité du cadre de la bicyclette.

Selon la bicyclette pliable objet de l'invention, les portions avant des tubes disposés de chaque coté latéral de la bicyclette comprennent chacune une pièce de protection configurée pour venir au contact du sol et protéger lesdites portions avant lorsque ladite bicyclette pliable est en position pliée et stabilisée sur le sol.

Selon l'invention, les structures tubulaires sont constituées de tubes en tant que tels, creux et circulaires. Mais on pourrait également remplacer ces tubes par des barres pleines présentant une section circulaire, carrée, rectangulaire ou triangulaire, voire autres. Il peut également s'agir de tiges creuses présentant une section rectangulaire ou triangulaire, voire autres. L'utilisation de tubes ayant pour avantages d'alléger le cadre de la bicyclette.

Les caractéristiques de la présente invention apparaitront à la lecture de la description suivante d'un mode préférentiel de conception de la bicyclette pliable s'appuyant sur des figures parmi lesquelles :
- la figure 1 illustre une vue d'ensemble de la bicyclette en condition d'utilisation ;
- la figure 2 illustre une vue partielle de la bicyclette en position pliée et stabilisée sur le sol ;
- la figure 3 illustre la bicyclette en position pliée et stabilisée sur le sol avec un utilisateur assis sur la selle ;
- la figure 4 illustre partiellement la bicyclette en position pliée et manipulée par un utilisateur ;
- la figure 5 illustre un mode préférentiel de conception de la structure tubulaire disposée sur les cotés latéraux de la bicyclette pliable, objet de l'invention ;
- les figures 6 et 7 illustrent deux variantes de conception de la structure tubulaire.

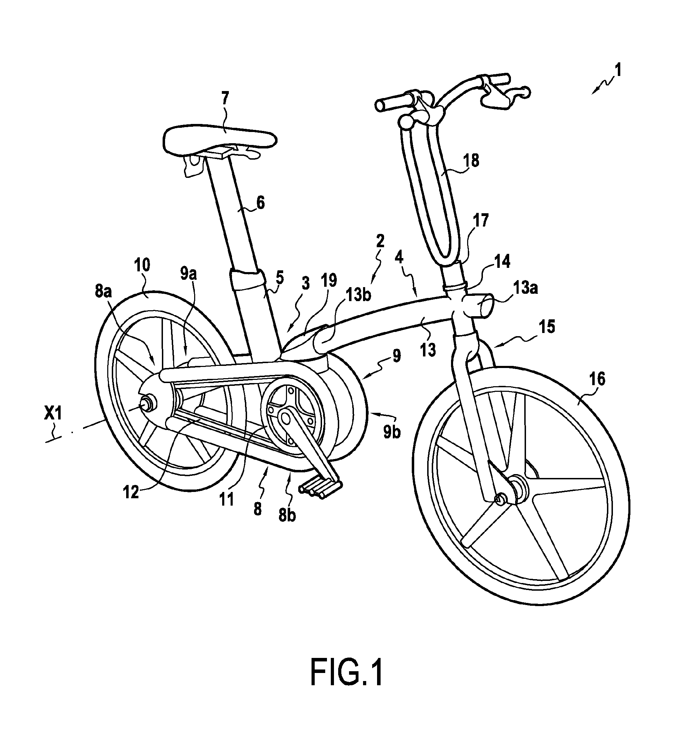

Tel qu'illustré sur la figure 1, la bicyclette pliable 1 comprend un cadre 2 qui comporte une partie arrière 3 et une partie avant 4. La partie arrière 3 comprend un tube de selle 5 qui s'étend plus ou moins verticalement tel qu'illustré sur la figure 1. Ce tube de selle 5 reçoit à coulissement une tige de selle 6, des moyens de serrage étant mis en oeuvre entre la tige de selle 6 et le tube de selle 5 pour assurer le blocage entre lesdits éléments selon le réglage souhaité. Cette tige de selle 6 reçoit à son extrémité supérieure une selle 7. En outre, la partie arrière 3 comprend deux structures tubulaires 8, 9 disposées de chaque coté latéral du tube de selle 5, tel qu'illustré sur la figure 1, c'est-à-dire sur les côtés latéraux de la bicyclette.

La bicyclette comprend une roue arrière 10 qui est montée en liaison pivot selon un axe transversal X1 sur la bicyclette. Cet assemblage de la roue arrière est réalisé par rapport aux portions arrières 8a, 9a des deux structures tubulaires 8, 9. On constate en outre sur cette figure 1 que la partie arrière 3 reçoit un pédalier 11 ainsi qu'un système de transmission 12 pouvant consister en une chaîne ou en une courroie, ce système de transmission 12 étant agencé entre le pédalier 11 et la roue arrière 10.

La partie avant 4 de la bicyclette 1 comprend un tube longitudinal 13, à l'extrémité avant 13a duquel est agencé un tube directionnel 14 qui s'étend sensiblement à la verticale, avec une légère inclinaison vers l'arrière, tel qu'illustré sur la figure 1. Ce tube directionnel 14 reçoit en liaison pivot selon l'axe longitudinale dudit tube directionnel 14, une fourche 15 à l'extrémité inférieure de laquelle est montée en liaison pivot selon un axe transversal à ladite fourche 15, une roue avant 16. Cette fourche 15 reçoit à son extrémité supérieure une potence 17 sur laquelle est monté un guidon 18.

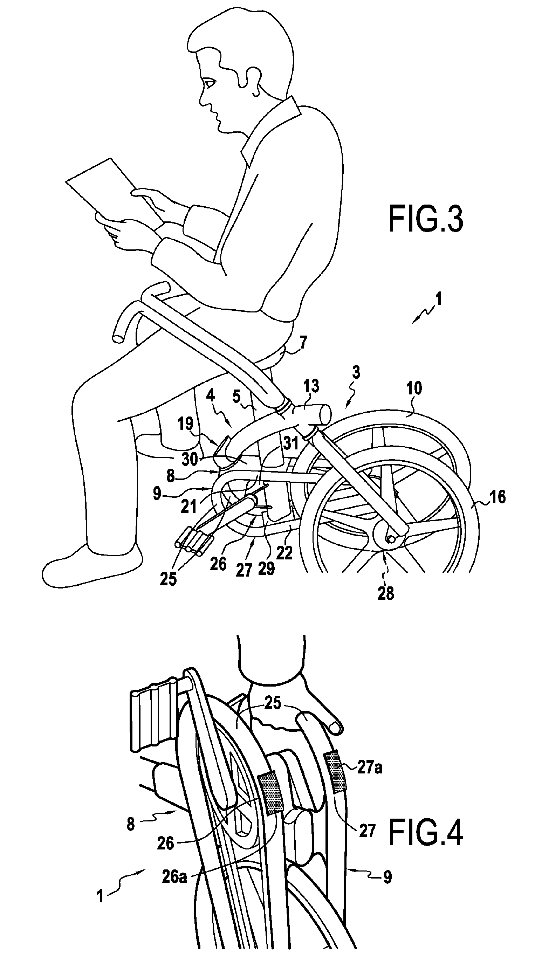

On constate notamment au regard des figures 1 à 3 qu'un système de pliage 19 est agencé entre l'extrémité arrière 13b du tube longitudinal 13 et les portions avant 8b, 9b des deux structures tubulaires 8, 9. Ce système de pliage 19 permet de rabattre la partie avant 4 contre la partie arrière 3, tel qu'illustré au travers de la figure 3. Dans cette position pliée de la bicyclette 1, l'axe de la roue avant 16 est sensiblement disposé coaxialement par rapport à l'axe de la roue arrière 10, tel qu'illustré sur la figure 3. Selon la conception de ce système de pliage 19, on peut envisager que la roue avant 16 soit légèrement décalée vers le haut par rapport à la roue arrière 10, lorsque la bicyclette est pliée.

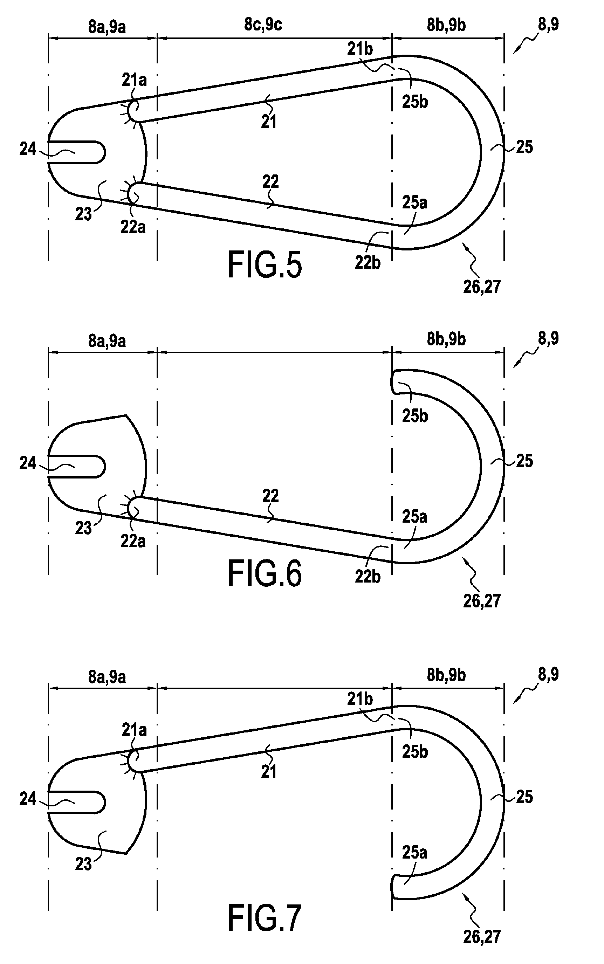

La figure 5 montre en détail une conception préférentielle des structures tubulaires 8, 9 mises en oeuvre de chaque coté latéral de la bicyclette 1. Ces structures tubulaires 8, 9 comprennent dans leur partie centrale 8c, 9c, un tube supérieur 21 et un tube inférieur 22. On constate sur la figure 5 que, dans la portion arrière 8a, 9a de ces deux structures tubulaires 8,9, les extrémités arrières 21a, 22a des tubes supérieur et inférieur sont fixées à une platine support 23 qui comprend une rainure 24 débouchant sur l'arrière, laquelle permet la fixation d'une extrémité de l'axe de la roue arrière 10, tel que cela apparait sur la figure 1. On constate sur la figure 5 que, au niveau de la portion avant 8b, 9b des structures tubulaires 8, 9, les extrémités avant 21b, 22b des tubes supérieur 21 et inférieur 22 sont fixées à une portion tubulaire cylindrique 25. Le tube supérieur 21, la portion tubulaire cylindrique 25 et le tube inférieur 22 peuvent être mis en oeuvre au moyen d'éléments tubulaires distincts fixés entre eux notamment par soudage. On peut toutefois envisager la mise en oeuvre de ce tube supérieur 21, de cette portion tubulaire 25 et de ce tube inférieur 22, au moyen d'un seul et même tube qui est recourbé sur lui-même.

On constate notamment sur la figure 1 que la structure tubulaire 8 sur le coté latéral de la bicyclette où se situe le pédalier 11 entoure ledit pédalier 11 ainsi que le système de transmission 12. De préférence, la structure tubulaire 9 sur le coté latéral de la bicyclette, opposée à celle où se situe le pédalier 11, dispose d'une forme et de dimensions identiques à la première structure tubulaire 8.

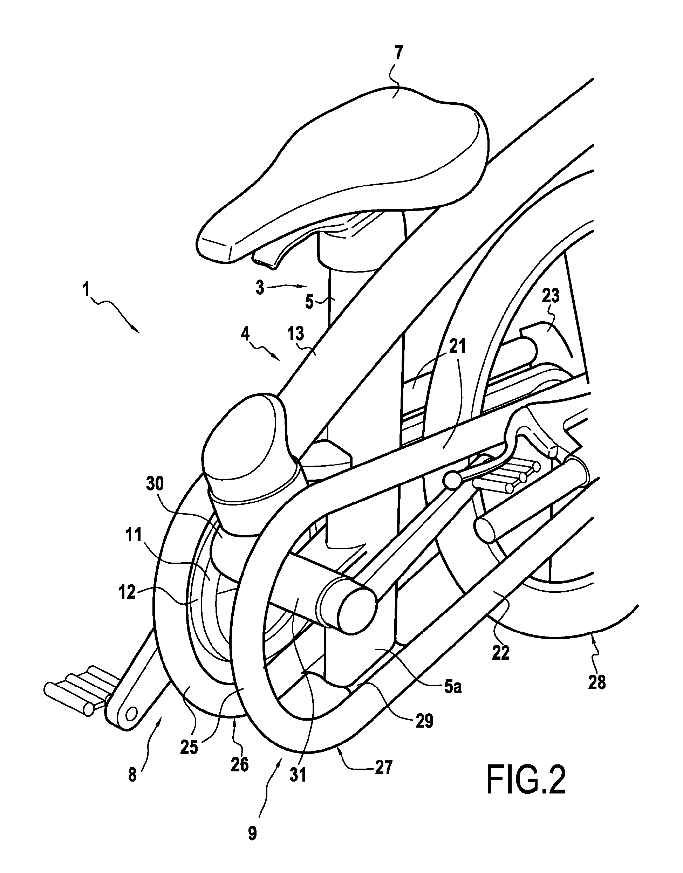

Ces portions tubulaires cylindriques 25, au niveau de portions avant 8b, 9b des structures tubulaires 8, 9, permettent de constituer deux appuis 26, 27 qui permettent, tel qu'illustré sur les figures 2 et 3, de prendre contact sur le sol ou la surface sur laquelle repose la bicyclette 1 en position pliée et de maintenir la partie arrière 3 de cette bicyclette 1 dans une position verticale. Ainsi, la bicyclette en position pliée, est stabilisée par la combinaison des deux appuis 26, 27 des deux portions tubulaires cylindriques 25 disposés sur les cotés latéraux de la bicyclette et par au moins le point de contact 28 de la partie inférieure de la roue arrière 10, également en contact sur le sol. Ces deux appuis 26, 27 permettent de stabiliser convenablement le coté avant de la partie arrière 3 de la bicyclette 1, dans lequel est disposé en partie supérieure, le tube de selle 5. Cela permet à l'utilisateur de s'asseoir sur la selle de manière stable, tel que cela est illustré sur la figure 3.

On constate sur la figure 4, que les structures tubulaires 8, 9 comprennent, au niveau des appuis 26, 27 de chacune des portions tubulaires cylindriques 25, des pièces de protection 26a, 27a configurées pour prendre appui sur le sol en sorte d'éviter une dégradation des structures tubulaires 8, 9, lorsque la bicyclette, en position pliée, repose sur le sol.

On constate en regard des figures 2 à 4, qu'une première plaque 29 est fixée notamment par soudure entre les extrémités inférieures 25a des portions tubulaires cylindriques 25 des deux structures tubulaires 8, 9, ces extrémités inférieures 25a des portions tubulaires cylindriques 25 étant attenantes aux extrémités avant 22b des tubes inférieurs 22. On constate sur les figures 2 et 3 que l'extrémité inférieure 5a du tube de selle 5 est fixé à cette première plaque transversale 29 disposée en partie inférieure.

De même, on constate au travers des figures 2 et 3, qu'une seconde plaque transversale 30, disposée en partie supérieure, est fixée notamment par soudure entre les extrémités supérieures 25b des portions tubulaires cylindriques 25 des deux structures tubulaires 8, 9. Les extrémités supérieures 25b sont attenantes aux extrémités avant 21b des tubes supérieurs 21. On constate sur les figures 2 et 3 que cette seconde plaque transversale 30, disposée du coté supérieur, reçoit le système de pliage 19 et est fixé, notamment par soudure avec le tube de selle 5, plus ou moins dans la partie centrale dudit tube de selle 5. Bien entendu on pourrait envisager de fixer ces première et seconde plaques transversales 29, 30 au niveau des extrémités avant 21b, 22b des tubes supérieur 21 et inférieur 22 lorsque les structures tubulaires 8, 9 sont telles qu'illustrées en figure 5.

On constate sur les figures 2 et 3 que le boitier 31 du pédalier 11 est fixé sur le tube de selle 5, ce boitier de pédalier 31 étant disposé entre le tube supérieur 21 et le tube inférieur 22 des deux structures tubulaires 8, 9, voire à l'intérieur de la portion tubulaire cylindrique 25.

La structure tubulaire 8 disposée sur le côté latéral où se situe le pédalier 11 est dimensionnée en sorte que la largeur des tubes supérieur 21 et inférieur 22 ainsi que de la portion tubulaire cylindrique 25 soient supérieures à la largueur du système de transmission 12 constitué par exemple d'une courroie ou d'une chaîne de transmission. En outre, tel qu'on le constate notamment sur la figure 1, ce système de transmission 12 est légèrement décalé vers l'intérieur de la bicyclette 1 par rapport à la structure tubulaire 8. Cela présente pour avantage d'éviter tout contact avec le système de transmission 12, notamment avec les jambes lors de l'utilisation de la bicyclette 1.

On constate sur la figure 4 que la portion tubulaire cylindrique 25 de la structure tubulaire 9, disposée sur le côté latéral de la bicyclette opposé au côté latéral où se situe le pédalier 11, permet de par sa forme recourbée de manipuler la bicyclette lorsque celle-ci est en position pliée.

D'autres caractéristiques peuvent être envisagées sans sortir du cadre de la présente invention. On peut notamment prévoir des variantes de conception des structures tubulaires 8 et 9 qui, de préférence, sont identiques pour des raisons d'esthétisme, mais peuvent être de conception différente, ces différentes conceptions présentant toutefois une portion avant recourbée permettant de constituer les deux appuis 26, 27 venant en contact contre le sol lorsque la bicyclette est en positon pliée, en sorte de stabiliser la bicyclette 1. On peut notamment prévoir des variantes de conception telles qu'illustrées aux figures 6 et 7. On constate sur cette figure 6 que la structure tubulaire 8, 9 présente une conception semblable à celle décrite précédemment pour la figure 5, sur laquelle toutefois le tube supérieur 21 a été supprimé. Inversement, sur la figure 7, on constate que la structure tubulaire 8, 9 comprend une conception similaire à celle de la figure 5 décrite précédemment, sur laquelle toutefois le tube inférieur 22 a été supprimé. Dans les deux cas, on constate que la portion tubulaire cylindrique 25 dispose d'un appui 26, 27 venant en contact contre le sol lorsque la bicyclette est en position pliée et stabilisée sur le sol, telle qu'illustrée sur les figures 2 et 3.

Dans la description qui précède, il est fait référence à des structures tubulaires. L'utilisation de tube permet d'alléger le cadre de la bicyclette. On pourrait toutefois envisager la mise en oeuvre de ce cadre, sans sortir de l'objet de la présente invention, en utilisant des barres pleines, voire des tiges creuses, qui présentent une section transversale de forme différente de celle d'un cercle tel que par exemple un carré, un rectangle, un triangle, selon l'esthétisme que l'on souhaite donner à la bicyclette.

Lorsque la bicyclette 1 est en position pliée, l'axe de la roue avant 16 est disposé soit dans l'axe de la roue arrière 10 soit légèrement décalé au dessus par rapport à l'axe de la roue arrière 10, selon la conception du système de pliage 19. De tels systèmes de pliage 19 sont connus de l'homme du métier. On comprend que lorsque l'axe de la roue avant 16 est disposé coaxialement par rapport à l'axe de la roue arrière 10, les deux roues avant et arrière 16, 10 reposent sur le sol et assurent en combinaison avec les deux appuis 26, 27 des portions tubulaires cylindriques 25 des deux structures tubulaires 8, 9, une stabilisation de la bicyclette en position pliée. Au contraire, lorsque l'axe de la roue avant 16 est décalé vers le haut par rapport à l'axe de la roue arrière 10, seule la roue arrière assure un point de contact au sol et stabilise la bicyclette en position pliée en combinaison avec les deux appuis 26, 27 des portions tubulaires cylindriques 25 des deux structures tubulaires 8, 9.

## Revendications

1. Bicyclette pliable (1) comprenant un cadre (2) qui comporte :
- une partie arrière (3) sur laquelle sont agencés notamment une roue arrière (10), un tube de selle (5), une selle (7) et un pédalier (11),
- une partie avant (4) sur laquelle sont agencés notamment un tube de direction (14), un guidon (18) et une roue avant (16) et,
- un système de pliage (19) agencé entre la partie arrière (3) et la partie avant (4) et configuré pour rabattre ladite partie avant (4) contre ladite partie arrière (3),
**caractérisée en ce que** la partie arrière (3) comprend de chaque côté latéral de la bicyclette (1), une structure tubulaire (8, 9) comprenant au moins un tube (21, 22, 25) s'étendant longitudinalement et comportant une portion arrière (8a, 9a) et une portion avant (8b, 9b), des moyens d'assemblage (23, 24) étant agencés entre lesdites portions arrière (8a, 9a) et la roue arrière (10), lesdites portions avant (8b, 9b) ayant une forme recourbée configurée pour venir au contact du sol lorsque la partie avant (4) est rabattue contre la partie arrière (3), en sorte que lesdites deux portions avant (8b, 9b) et au moins la roue arrière (10) stabilisent la partie arrière (3) de la bicyclette en position pliée.

2. Bicyclette pliable (1) selon la revendication 1, la portion avant de la structure tubulaire (8) située sur le côté latéral de la bicyclette (1) où est agencé le pédalier (11), présente une forme recourbée configurée pour entourer ledit pédalier (11).

3. Bicyclette pliable (1) selon la revendication 2, comprenant un système de transmission (12) qui engrène avec le pédalier (11) et avec la roue arrière (10), la structure tubulaire (8) du côté dudit pédalier (11) comprenant un tube supérieur (21) et un tube inférieur (22) reliés entre eux à l'avant par une portion tubulaire cylindrique (25), lesdits tubes supérieur (21) et inférieur (22) et ladite portion tubulaire cylindrique (25) entourant le système de transmission (12) et étant de largeur supérieure à la largeur dudit système de transmission (12), en sorte de recouvrir ledit système de transmission (12) et de faciliter l'assemblage du système de transmission.

4. Bicyclette pliable (1) selon la revendication 3, dans laquelle le système de transmission (12) est déporté vers l'intérieur de la bicyclette (1) par rapport aux tubes supérieur (21) et inférieur (22) et à la portion tubulaire cylindrique (25), en sorte d'éviter tout contact avec ledit système de transmission (12).

5. Bicyclette (1) selon la revendication 1, dans laquelle la portion avant (9b) du tube de la structure tubulaire (9) située sur le côté latéral de la bicyclette (1), opposé à celui où est agencé le pédalier (11), présente une forme recourbée configurée pour permettre la manipulation avec une main, de ladite bicyclette en position pliée.

6. Bicyclette pliable (1) selon la revendication 1, dans laquelle les structures tubulaires (8, 9) sont disposées de chaque côté du tube de selle (5) et sont fixées entre elles, dans leurs portions avant, par l'intermédiaire d'une première plaque transversale (29).

7. Bicyclette pliable (1) selon la revendication 6, le tube de selle (5) comprenant une extrémité inférieure (5a) qui est fixée sur la première plaque transversale (29).

8. Bicyclette pliable (1) selon la revendication 3, le pédalier (11) étant monté sur le tube de selle (5) dans une portion située entre le tube supérieur (21) et le tube inférieur (22), indépendamment desdits tubes supérieur (21) et inférieur (22).

9. Bicyclette pliable (1) selon la revendication 1, les portions avant (8a, 9a) des structures tubulaires (8, 9) étant fixées entre elles par l'intermédiaire d'une seconde plaque transversale (30), le système de pliage (12) étant agencé sur la seconde plaque transversale (30).

10. Bicyclette pliable (1) selon la revendication 9, la seconde plaque transversale (30) étant fixée avec le tube de selle (5).

11. Bicyclette pliable (1) selon la revendication 1, les portions avant (8a, 9a) des structures tubulaires (8, 9) comprenant chacune une pièce de protection (26a, 27a) configurée pour venir au contact du sol et protéger lesdites portions avant (8a, 9a).
